# EUROPÄISCHE PATENTSCHRIFT

(11) **EP 0 414 073 B1**
(45) Veröffentlichungstag und Bekanntmachung des Hinweises auf die Patenterteilung: **29.12.1993**
(21) Anmeldenummer: 90115435.1
(22) Anmeldetag: 11.08.1990
(51) Int. Cl.: C08G 18/08

(54) **Verfahren zur Herstellung von Polyurethanpulvern**
Process for the preparation of polyurethane powders
Procédé de préparation de poudres de polyuréthane

(30) Priorität: 25.08.1989 DE 3928149
(43) Veröffentlichungstag der Anmeldung: 27.02.1991
(73) Patentinhaber: BAYER AG, 51368 Leverkusen (DE)
(72) Erfinder: Hassel, Tillmann, Dr., D-5000 Köln 80 (DE); Müller, Hanns Peter, Dr., D-5060 Bergisch Gladbach 2 (DE); Vernaleken, Hugo, Dr., D-4150 Krefeld 1 (DE); Kipphardt, Helmut, Dr., D-2000 Hamburg 67 (DE); Dhein, Rolf, Dr., D-4150 Krefeld 1 (DE)

(56) Entgegenhaltungen:
- EP-A- 0 208 187
- US-A- 4 000 218
- US-A- 4 032 516

## Beschreibung

Die Erfindung betrifft ein Verfahren zur direkten Herstellung von Polyurethanpulvern aus den Komponenten in organischer Trägerphase.

Polyurethanpulver und ihre technische Verwendung sind bekannt. Die Pulver werden gewöhnlich aufwendig durch Mahlung entsprechender Granulate hergestellt. Wesentlich rationeller ist die direkte Synthese der Pulver aus den Komponenten in organischer Trägerphase nach den Methoden der Suspensionspolymerisation, wobei die besten Resultate dann erhalten werden, wenn man als Trägerphase aliphatische und/oder alicyclische Kohlenwasserstoffe einsetzt.

Zur Durchführung dieser Direktsynthese sind grenzflächenaktive Hilfsstoffe essentiell. Die Hilfsstoffe haben die Aufgabe, die Reaktionskomponenten in feinzerteilte Emulsionen zu bringen und das sich bildende Polyurethan bis zum Reaktionsende in Emulsion bzw. Suspension zu halten.

In der DE-A-2 816 170 werden spezielle Polyoxyalkylenpolydimethylsiloxan-pfropf- bzw. -block-copolymere als grenzflächenaktive Hilfsstoffe für die direkte Synthese von Polyurethanpulvern in einer Trägerphase aus aliphatischen Kohlenwasserstoffen vorgeschlagen. Polydimethylsiloxan-haltige Polymere sind jedoch für PU-Anwendungen in der Regel nicht günstig, da sie leicht zu Oberflächenstörungen der Formkörper und Schwierigkeiten bei der Lackierung führen, so daß man peinlich darauf achten muß, diese Hilfsstoffe möglichst quantitativ aus dem Pulver zu entfernen. In der DE-A-2 456 927 werden als grenzflächenaktive Hilfsstoffe zur direkten Herstellung von Polyurethanpulvern nach den Methoden der Suspensionspolymerisation in einer aliphatischen Kohlenwasserstoff-Trägerphase Block- bzw. Pfropf-copolymere aus Polylactonen und langkettigen Alkylestern der (Meth)acrylsäure sowie entsprechende Produkte aus Polyoxyalkylenglykolen und langkettigen Alkylestern der (Meth)acrylsäure beschrieben. Diese Hilfsstoffe haben den Nachteil, daß sie OH-funktionell sind und damit in das hergestellte Polyurethan eingebaut werden, was zur Veränderung der mechanischen Eigenschaften der Produkte führen kann und außerdem die erneute Verwendung der Hilfsstoffe unmöglich macht.

In DE-A-2 556 945, 2 559 769, 2 442 085 sowie US-A- 4 032 516 und 3 787 525 werden Copolymere aus N-Vinyl-Pyrrolidon und langkettigen α-Olefinen als grenzflächenaktive Hilfsstoffe für die direkte Synthese von PU-Pulvern in einer Kohlenwasserstoff-Trägerphase eingesetzt.

Diese Hilfsstoffe sind nicht einbaubar, werden aber schwer von der Oberfläche der gebildeten Pulver desorbiert, so daß zur Rückgewinnung der Hilfsstoffe aufwendige Waschoperationen erforderlich sind.

Aufgabe der vorliegenden Erfindung war es, ein verbessertes Verfahren zur direkten Herstellung von Polyurethanpulvern zur Verfügung zu stellen, welches zu feinteiligen Polyurethandispersionen führt und bei dem die verwendeten Emulgatoren nach der Bildung der Pulver leicht entfernt werden können.

Gegenstand der Erfindung ist ein Verfahren zur direkten Herstellung von Polyurethanpulvern in feinverteilter Form durch Umsetzung von Polyisocyanaten und isocyanatreaktiven Verbindung in einer Trägerphase unter Verwendung von grenzflächenaktiven Verbindungen, dadurch gekennzeichnet, daß als grenzflächenaktive Verbindung wenigstens ein Polymerisat eines Urethans der Formel 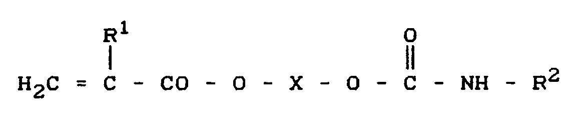
worin bedeuten
- R¹: H, CH₃,
- X: ein gegebenenfalls verzweigter aliphatischer Alkylyden rest mit 2 bis 10, insbesondere 2 bis 4, C-Atomen,
- R²: ein gegebenenfalls verzweigter aliphatischer Alkylrest mit 6 bis 30, bevorzugt 10 bis 20, insbesondere 18, C-Atomen,

aus einem langkettigen Alkylisocyanat B1) und einem Hydroxyalkyl-(meth)acrylsäureester B2) verwendet wird.

Als Komponente B2) werden Mono(meth)acrylsäureester von - gegebenenfalls verzweigten - aliphatischen C₂ bis C₁₀-Diolen, bevorzugt C₂ und C₄-Diolen und als Isocyanatkomponente B 1 - gegebenenfalls verzweigte - aliphatische C₆ bis C₃₀-Monoisocyanate, bevorzugt C₁₀ bis C₂₀-Monoisocyanate, besonders bevorzugt C₁₈-Monoisocyanate, verwendet.

Die erfindungsgemäß zu verwendenden Polymerisate sind zwar aus der DE-A-2 456 737 bekannt, sie wurden jedoch bisher nicht als Hilfsstoffe zur direkten Synthese von Polyurethanpulvern in einer Kohlenwasserstoff-Trägerphase eingesetzt.

Die erfindungsgemäß zu verwendenden Polymerisate bestehen ausschließlich aus polymerisierten Urethanen aus einem langkettigen Alkylisocyanat B1) und einem Hydroxyalkyl-(meth)acrylsäureester B2), insbesondere der angegebenen allgemeinen Formel.

Geeignete Hydroxyalkylester B2) zur Herstellung dieser Urethane sind beispielsweise Acrylsäure-2-hydroxyethylester, Acrylsäure-2-hydroxypropylester, Acrylsäure-4-hydroxybutylester, Acrylsäure-6-hydroxyhexylester, sowie vorzugsweise die entsprechenden Methacrylsäureester. Die Alkoholkomponente dieser beispielhaft erwähnten Hydroxyalkylester leitet sich von - gegebenenfalls verzweigten - aliphatischen C₂ bis C₁₀-Diolen ab. Bevorzugt werden Ester wie Methacrylsäure-2-hydroxyethylester und Methacrylsäure-4-hydroxybutylester verwendet, deren Alkoholkomponente sich von C₂ und C₄-Diolen ableitet.

Geeignete Monoisocyanate B1) zur Herstellung dieser Urethane leiten sich von - gegebenenfalls verzweigten - aliphatischen Monoaminen ab, deren Kohlenstoffkette 6 bis 30, bevorzugt 10 bis 20, besonders bevorzugt 18, Kohlenstoffatome umfaßt.

Beispiele für solche Isocyanate sind 2-Ethyl-hexylisocyanat, Decylisocyanat, Dodecylisocyanat, Tetradecylisocyanat, Hexadecylisocyanat, Stearylisocyanat, Eicosylisocyanat und Tetraeicosylisocyanat. Bevorzugt sind Isocyanate wie Decylisocyanat, Palmitylisocyanat, Myristylisocyanat und Stearylisocyanat. Diese Isocyanate können auch als Gemische eingesetzt werden.

Bevorzugte Verbindungen B sind erhältlich aus:
Mono(meth)acrylsäurestern B2) von - gegebenenfalls verzweigten - aliphatischen C₂ bis C₁₀-Diolen, bevorzugt C₂ und C₄-Diolen und - gegebenenfalls verzweigten - aliphatischen C₆ bis C₃₀-Monoisocyanaten, bevorzugt C₁₀ bis C₂₀-Monoisocyanaten, besonders bevorzugt C₁₈-Monoisocyanaten als Verbindung B1).

Die Polymerisation derartiger Urethane ist bekannt (DE-A-2 456 737, JA 14 805/64). Sie gelingt nach für Acrylate üblichen Methoden, wie sie erschöpfend in Houben-Weyl: Methoden der organischen Chemie, Band E 20, S. 1141-1176, Thieme Stuttgart 1987 beschrieben sind.

Erfindungsgemäß erlauben die Polymerisate die direkte Herstellung von Polyurethanpulvern aus Polyisocyanaten, Makropolyolen, Makropolyaminen, Kettenverlängerern, sowie gegebenenfalls Kettenreglern und weiteren Hilfs-und Zusatzstoffen in aliphatischer und/oder alicyclischer Kohlenwasserstoff-Trägerphase, wenn sie dem System zugesetzt werden.

In einer bevorzugten Ausführungsform bezieht sich die Erfindung auf ein Verfahren zur direkten Herstellung von Polyurethanpulvern aus Polyisocyanaten, Makropolyolen, Kettenverlängerern, gegebenenfalls Kettenreglern sowie weiteren Hilfs- und Zusatzstoffen in aliphatischer und/oder alicyclischer Kohlenwaserstoff-Trägerphase, dadurch gekennzeichnet, daß man die Synthese in Gegenwart von 0,05 bis 10 %, bevorzugt 0,5, bis 5 %, besonders bevorzugt 1 bis 3 % der Polymerisate, bezogen auf das Gesamtgewicht des herzustellenden Polyurethans ausführt.

Geeignet für dieses Verfahren sind grundsätzlich alle bekannten aromatischen, alicyclischen und aliphatischen Polyisocyanate, zur Synthese linearer Produkte werden jedoch speziell Diisocyanate der Formel Q (NCO)₂ verwendet, in welcher Q für einen aromatischen Kohlenwasserstoffrest mit 6 bis 15 Kohlenstoffatomen, für einen aliphatischen Kohlenwasserstoffrest, einen cycloaliphatischen oder einen gemischt aliphatisch/cycloaliphatischen Kohlenwasserstoffrest mit 2 bis 15 Kohlenstoffatomen steht. Beispiele solcher Diisocyanate sind Toluylendiisocyanat, Naphthylendiisocyanat, Diphenylmethandiisocyanat, Hexamethylendiisocyanat, Isophorondiisocyanat, Cyclohexan-1,4-diisocyanat und Perhydrodiphenylmethandiisocyanat. Diese Isocyanate können auch als Gemische verwendet werden.

Unter geeigneten Makropolyolen werden die in der Polyurethanchemie üblicherweise verwendeten und bekannten Substanzen verstanden. Es handelt sich um Verbindungen mit im Durchschnitt mindestens 1,8 gegenüber Isocyanaten reaktionsfähigen Wasserstoffatomen von einem Molekulargewicht in der Regel von 400 bis 10.000. Hierunter versteht man hydroxylgruppenaufweisende Verbindungen, insbesondere zwei bis acht Hydroxylgruppen aufweisende Verbindungen, speziell solche vom Molekulargewicht 450 bis 6.000, vorzugsweise 600 bis 4.500, z.B. mindestens zwei, in der Regel 2 bis 8, vorzugsweise aber 2 bis 4 Hydroxylgruppen aufweisende Polyester, Polyether, Polythioether, Polylactone, Polycarbonate, Polyestercarbonate, Polyethercarbonate, Polyacetale und Polyesteramide. Erfindungsgemäß besonders vorteilhaft ist es, zur Herstellung der Polyurethane Makropolyole mit einer OH-Funktionalität von zwei zu verwenden. Dadurch werden lineare Produkte erhalten.

Es ist auch möglich als makromolekulare Verbindungen Makropolyamine, insbesondere Makrodiamine, zu verwenden. Derartige Makropolyamine können beispielsweise aus Polyetherpolyolen gemäß DAS 1 215 373 durch direkte Umsetzung mit Ammoniak hergestellt werden. Man kann aber auch die Makropolyole mit Diisocyanaten, bevorzugt aromatischen Diisocyanaten in Isocyanat-Prepolymere überführen und diese Prepolymere zu den aminoterminierten Verbindungen hydrolysieren.

Besonders bevorzugt ist jedoch die Verwendung von Makropolyolen.

Geeignete Kettenverlängerer sind die in der PU-Chemie üblicherweise verwendeten kurzkettigen, in der Regel gegenüber Isocyanaten difunktionellen Alkohole, Amine und Aminoalkohole Beispiele für derartige Verbindungen sind Alkohole wie Ethylenglykol, 1,4-Butandiol, 1,6-Hexandiol, Neopentylglykol, Hydrochinon-bis-2-hydroxyethylether, 1,4-Cyclohexandiol, Diethylenglykol, 4,4'-Dihydroxydicyclohexylmethan; Amine wie Ethylendiamin, N,N'-Dimethylethylendiamin, 1,6-Diaminohexan, Isophorondiamin, 4,4'-Diamino-dicyclohexylmethan, N,N',N''-Trimethyl-diethylentriamin, Piperazin und Aminoethylpiperazin. Als Aminoalkohole seien beispielsweise Ethanolamin und N-2-Hydroxyethylpiperazin genannt.

Zur Regelung der Molmasse der erfindungsgemäß direkt herstellbaren Polyurethanpulver können auch gegebenenfalls in dem Fachmann bekannter Weise Kettenregler eingesetzt werden. Hierbei handelt es sich um monofunktionelle Isocyanate, Alkohole und/oder Amine wie beispielsweise Butylisocyanat, Phenylisocyanat, Ethanol, Isopropanol, Decanol oder Dibutylamin, Hexylamin, Morpholin.

Unter weiteren Hilfs- und Zusatzstoffen werden zum einen die dem Fachmann bekannten Katalysatoren der Polyurethanchemie wie beispielsweise Zinn-II-octoat, Dibutylzinndilaurat, Titantetrabutylat, Eisen-II-acetylacetonat, Diazabicyclooctan und N,N-Tetramethylethylendiamin verstanden. Andere Zusatzstoffe sind beispielsweise Füllstoffe und Verstärkungsstoffe wie Glasfasern, C-Fasern, TiO₂, Diatomeenerde, aromatische Polyamide, LC-Polyester auch in gemahlener Form, Quarzmehl und Polyharnstoffe sowie Farbstoffe wie anorganische oder organische Pigmente. Derartige Zusatzstoffe sind in der Kohlenwasserstoffphase unlöslich und werden vorteilhaft vor Ausführung der direkten Polyurethan-Pulversynthese in die eingesetzten Makropolyole eingearbeitet.

Als Trägerphase für die erfindungsgemäßen Verfahren werden Kohlenwasserstoffe bevorzugt, wobei die Siedepunkte bzw. Siedebereiche vorzugsweise der gewünschten Reaktionstemperatur entsprechen. Demzufolge können Kohlenwasserstoffe mit Siedepunkten zwischen 40° C und 200° C verwendet werden, normalerweise bevorzugt man einen Siedebereich zwischen 60° C und 150° C, wegen der einfachen Abtrennung und schnellen Trocknung der PU-Pulver sind Siedebereiche der Trägerphase zwischen 80° C und 120° C besonders günstig. Die Kohlenwasserstoffe können als Reinstoffe, aber auch als Gemische eingesetzt werden, am ökonomischsten verwendet man aromatenfreie Benzinfraktionen der angegebenen Siedebereiche.

Bei der erfindungsgemäßen Herstellung von Polyurethanpulvern in einer Kohlenwasserstoff-Trägerphase erhält man die Pulver in Form sedimentierender Suspensionen, aus denen die Produkte beispielsweise durch Filtration abgetrennt werden. Der Feststoffgehalt dieser Suspensionen kann verschieden sein, beispielsweise zwischen 10 und 60 % liegen. Im Interesse einer guten Raum-Zeitausbeute sind höhere Feststoffgehalte günstig, jedoch ist die Pulversynthese bei Feststoffgehalten bis 50 % einfacher durchzuführen. Daher werden Feststoffgehalte von 20 bis 50 % und besonders von 30 bis 40 % bevorzugt.

Die erfindungsgemäße Synthese wird vorzugsweise bei Temperaturen zwischen 40° C und maximal 140° C durchgeführt, bevorzugt wird ein Temperaturintervall zwischen 50° C und 100° C, optimal sind Reaktionstemperaturen zwischen 60° C und 80° C.

Der Aufbau von Polyurethanen in Substanz ist prinzipiell nach verschiedenen Verfahren möglich. Entweder werden alle Komponenten vermischt und zur Reaktion gebracht ("one shot"-Verfahren) oder man stellt zunächst ein Voraddukt aus Makropolyol und Polyisocyanat her, welches in einer zweiten Reaktionsstufe mit dem Kettenverlängerer umgesetzt wird (Prepolymermethode). Es ist bekannt, daß sich so hergestellte Polyurethankunststoffe bei gleicher Bruttozusammensetzung je nach Synthesemethode in ihren anwendungstechnischen Eigenschaften unterscheiden. Erfindungsgemäß sind beide Methoden - oder Varianten davon - zur direkten Herstellung von Polyurethanpulvern in einer Kohlenwasserstoff-Trägerphase geeignet. Man kann beispielsweise Makropolyol und Kettenverlängerer in der Trägerphase emulgieren und dann die gewünschte Polyisocyanatmenge zugeben. Es ist auch möglich, das Polyisocyanat mit Emulgator in der Trägerphase vorzulegen und das Makropolyol vermischt mit dem Kettenverlängerer zuzufügen. Eine erfindungsgemäß besonders bevorzugte Variante dieses "one shot"-Verfahrens besteht darin, daß man Polyisocyanat und grenzflächenaktiven Hilfsstoff in der Trägerphase vorlegt, das System zum Sieden erhitzt und zur siedenden Mischung Makropolyol und Kettenverlängerer - gegebenenfalls vermischt - zutropft. Dadurch wird eine einfache Temperaturkontrolle erreicht. Die gewünschte Reaktionstemperatur kann durch entsprechende Wahl der Trägerphase eingestellt werden.

Andererseits ist es auch möglich, Makropolyol und Polyisocyanat in Substanz zum Prepolymer umzusetzen, danach das Prepolymer mit Hilfe der erfindungsgemäßen grenzflächenaktiven Stoffe in der Trägerphase zu emulgieren und diese Emulsion mit Kettenverlängerern, wie oben beschrieben, umzusetzen.

Schließlich kann man das Prepolymerverfahren auch so durchführen, daß man den Kettenverlängerer zusammen mit den erfindungsgemäßen Hilfsstoffen in der Trägerphase vorlegt und dann das NCO-Prepolymer zugibt.

Wegen der leichten Löslichkeit der erfindungsgemäß eingesetzten Homopolymeren und der entsprechenden Monomeren in der Trägerphase kann man auch - vor Ausführung der Pulversynthese nach den beschriebenen Verfahrensvarianten selbst - den Hilfsstoff in der Trägerphase in situ erzeugen.

### Beispiel 1

### Homopolymerisat

212,5 g des durch Dibutylzinn-dilaurat katalysierte Reaktion äquimolarer Mengen von 2-Hydroxyethyl-methacrylat und Stearylisocyanat in Toluol erhaltenen Urethans werden zusammen mit 0,06 g Dibenzoylperoxid in 650 g Toluol gelöst. Diese Lösung wird unter Rühren und Rückfluß innerhalb 2 Stunden zu 100 ml vorgelegtem Toluol getropft. Die Polymerisation wird unter N₂ durchgeführt. Es wird 12 Stunden unter Rückfluß nachgerührt, danach destilliert man das Lösemittel, zuletzt im Hochvakuum bei 80° C ab. Der verbleibende, wachsartig erstarrende Rückstand wird für Pulversynthesen verwendet. Ausbeute: quantitativ.

### Beispiel 2

In 118,5 g Ligroin eines Siedebereichs um 90° C werden 3,3 g des Hilfsstoffs aus Beispiel 1 vorgelegt. Bei 65° C werden unter kräftigem Rühren mit einem Blattrührer (1.200 U min⁻¹) 50 g eines entwässerten Butandiol-Adipinsäurepolyesters mit M̅ = 2.250 und F = 2 sowie 5 g 1,4-Butandiol zugegeben. Danach gibt man 20 g festes 4,4'-Diisocyanato-diphenylmethan zu sowie ~ 0,1 g Dibutylzinndilaurat. Die Temperatur fällt zuerst etwas und steigt dann kurzzeitig bis auf 90° C an. Man rührt bei 65° C, bis die Trägerphase NCO-frei ist (2 Stunden) kühlt, trennt den Feststoff ab und trocknet an der Luft.

Es wird ein freifließendes Pulver erhalten.
- Ausbeute:: 70 g
- Siebanalyse:: 400 µ < 4,37 % > 200 µ < 60,93 % > 160 µ < 18,39 % > 125 µ < 13,52 % > 80 µ < 2,78 % > 0 µ

Die Angaben zur Siebanalyse bedeuten jeweils den Massenanteil an Pulver, der nach einstündigem Schütteln auf einer Schüttelmaschine nicht durch das entsprechende Normsieb gemäß DIN 4188 fiel.

### Beispiel 3

Der Ansatz von Beispiel 2 wurde wiederholt, mit dem Unterschied, daß 2,2 g des Hilfsstoffs von Beispiel 1 eingesetzt wurden. Man erhielt 68 g freifließendes Pulver einer Korngröße < 400 µ.
- Siebanalyse:: 400 µ < 22,4 % > 200 µ < 51,76 % > 160 µ < 19,95 % > 125 µ < 5,26 % > 80 µ < 0,61 % > 0 µ

### Beispiel 4

### Rezyklisierung der Mutterlauge

Die durch einfaches Absaugen ohne Waschen erhaltene Trägerphase des Beispiels 3 wird nach Auffüllen auf das Anfangsgewicht als Trägerphase für die Wiederholung des Beispiels 3 eingesetzt; mit dem Unterschied, daß kein neuer Hilfsstoff hinzugefügt wird.

Es resultierten 69 g freifließendes Pulver mit folgender
- Siebanalyse:: 400 µ < 16,58 % > 200 µ < 29,02 % > 160 µ < 32,1 % > 125 µ < 15,2 % > 80 µ < 7,1 % > 0 µ

### Beispiel 5 (Vergleichsbeispiel)

Das Beispiel 3 wird wiederholt, mit dem Unterschied, daß als Hilfsstoff 2,2 g eines N-Vinyl-pyrrolidon-hexadecen-copolymers der mittleren Molmasse 7.300 (Antaron® V 216 der GAF) eingesetzt wird. Nach Beendigung der Reaktion wird die Trägerphase vom Pulver durch scharfes Absaugen abgetrennt. Das Pulver wird nicht gewaschen. Die so erhaltene Mutterlauge wird nach Auffüllen auf das Anfangsgewicht als Trägerphase erneut eingesetzt und der Versuch ohne Zugabe neuen Hilfsstoffs wiederholt. Dabei entstand kein Pulver, sondern das Polyurethan fiel als Klumpen aus.
Dieses Beispiel zeigt, daß das N-Vinylpyrrolidon-hexadecen-copolymer schlecht von der PU-Matrix desorbiert.

### Beispiel 6

In einem 2 l Reaktionsbecher mit Ankerrührer, Tropftrichter und Rückflußkühler werden 110 g 4,4'-Diisocyanato-diphenylmethan und 13,2 g des Hilfsstoffs aus Beispiel 1 in 537 g Ligroin vorgelegt. Man erhitzt auf Rückfluß (92° C) und gibt 2 g Dibutylzinndilaurat zu. Dann wird unter Rühren (250 Umin⁻¹) eine heiße (100° C) Mischung aus 100 g Polytetrahydrofuran (OHZ = 112, F = 2), 100 g Polytetrahydrofuran (OHZ = 56, F = 2), 26 g 1,4-Butandiol und 1,4 g Carnaubawachs innerhalb 25 Minuten zulaufen lassen. Es wird 1 Stunde unter Rückfluß nachgerührt, unter Rühren auf Raumtemperatur gekühlt, vom Pulver abgesaugt und getrocknet.
- Ausbeute:: 320 g
- Siebanalyse:: 400 µ < 54,45 % > 200 µ < 42,61 % > 160 µ < 2,51 % > 125 µ < 0,4 % > 80 µ.

### Beispiel 7

Ein Gemisch aus 25 g Polytetrahydrofuran (M̅ = 1.000, OHZ = 112) und 25 g Polytetrahydrofuran (M̅ = 2.000, OHZ = 56) wird mit 27,5 g 4,4'-Diisocyanato-diphenylmethan zum NCO-Prepolymer umgesetzt. Dieses Prepolymer wird heiß (90° C) zu einer siedenden (92° C) schnellgerührten (1.300 Umin⁻¹) Mischung aus 6,5 g 1,4-Butandiol 3,3 g des Hilfsstoffs aus Beispiel 1, 0,1 g Dibutylzinndilaurat und 133 g Ligroin innerhalb 30 Minuten zugetropft. Es wird 1 Stunde unter Rückfluß nachgerührt und danach auf Raumtemperatur abgekühlt. Das entstandene Pulver wird abgenutscht und getrocknet.
- Ausbeute:: 79 g
- Siebanalyse:: 400 µ < 72,38 % > 200 µ < 27,32 % > 160 µ < 0,3 % > 125 µ

### Beispiel 8

In einem Rundkolben mit Blattrührer, Rückflußkühler und Tropftrichter werden 13,2 g Hexamethylendiisocyanat und 3,96 g des Hilfsstoffs aus Beispiel 1 sowie 0,5 ml Dibutylzinndilaurat in 310 g Ligroin vorgelegt. Unter Rückfluß (92° C) und Rühren (1.300 Umin⁻¹) wird ein Gemisch aus 48 g Butandiol-polyadipat (F = 2, OHZ = 49,8); 12 g Hexandiol/Neopentylglykol-polyadipat (F = 2, OHZ = 56) und 4,8 g 1,4-Butandiol heiß (100° C) innerhalb 18 Minuten zugetropft. Man rührt 2 Stunden mit hoher Drehzahl unter Rückfluß nach, dann noch 8 Stunden langsam bei 70° C, kühlt ab und saugt vom Pulver ab.
- Ausbeute:: 70 g
- Siebanalyse:: 400 µ < 24,75 % > 200 µ < 53,29 % > 160 µ < 18,96 % > 125 µ < 2,4 % > 80 µ < 0,6 % > 0 µ

### Beispiel 9 (Vergleichsbeispiel)

Der Ansatz von Beispiel 8 wird wiederholt, mit dem Unterschied, daß anstelle des dort eingesetzten Hilfsstoffs 3,96 g des Hilfsstoffs aus Beispiel 5 verwendet werden. Bereits beim Zutropfen der Polyolmischung bildeten sich Klumpen, der Ansatz blieb aber rührbar. Es wurde wie in Beispiel 8 weitergerührt. Das Produkt wurde nach Kühlung durch Absaugen isoliert. Es war kein Pulver, sondern bestand aus unregelmäßig geformten Klumpen mit Querschnitten bis zu 2 cm.

### Beispiel 10

In einem 2 l Reaktionsbecher mit Ankerrührer, Tropftrichter und Rückflußkühler werden 86,2 g Diphenylmethan-diisocyanat und 8,9 g des Hilfsstoffs aus Beispiel 1 in 900 ml Ligroin vorgelegt. Man erhitzt auf Rückfluß (92° C) und gibt 700 mg n-Octanol sowie 200 mg Dibutylzinndilaurat zu. Danach wird unter Rühren (250 Umin⁻¹) innerhalb 20 Minuten eine heiße (100° C) Mischung aus 76,5 g eines Butandiol-polyadipats (M̅ = 2.250, F = 2), 13,5 g eines Hexandiolpolyadipats (M̅ = 2.000, F = 2) und 28,35 g 1,4-Butandiol zugetropft.
Man rührt 3 Stunden unter RF nach, kühlt ab und saugt vom Pulver ab.
- Ausbeute:: 200 g
- Siebanalyse:: 400 µ < 23,98 % > 200 µ < 10,98 % > 160 µ < 8,94 % > 125 µ < 11,59 % > 80 µ < 44,51 % > 0 µ

## Patentansprüche

1. Verfahren zur direkten Herstellung von Polyurethanpulvern in feinverteilter Form durch Umsetzung von Polyisocyanaten und isocyanatreaktiven Verbindungen in einer Trägerphase unter Verwendung von grenzflächenaktiven Verbindungen, dadurch gekennzeichnet, daß als grenzflächenaktive Verbindung wenigstens ein Polymerisat eines Urethans der Formel 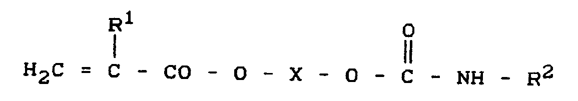 worin bedeuten
R¹ H, CH₃,
X ein gegebenenfalls verzweigter aliphatischer Alkylidenrest mit 2 bis 10 C-Atomen,
R² ein gegebenenfalls verzweigter aliphatischer Alkylrest mit 6 bis 30 C-Atomen
aus einem langkettigen Alkylisocyanat B1) und einem Hydroxyalkyl-(meth)acrylsäureester B2) verwendet wird.

2. Verfahren nach Anspruch 1 oder 2, dadurch gekennzeichnet, daß als Komponente B1) ein Isocyanat mit 18 C-Atomen in der Kohlenstoffkette und als Komponente B2) ein Mono(meth)acrylsäureester eines C₂ bis C₄-Diols verwendet wird.

3. Verfahren nach Anspruch 1 bis 3, dadurch gekennzeichnet, daß als Trägerphase ein Kohlenwasserstoff verwendet wird und daß man die Synthese in Gegenwart von 0,05 bis 10 % der grenzflächenaktiven Verbindung, bezogen auf das Gesamtgewicht des herzustellenden Polyurethans, ausführt.

4. Verfahren nach Anspruch 1 bis 4, dadurch gekennzeichnet, daß die Trägerphase aus aliphatischen und/oder alicyclischen - gegebenenfalls verzweigten -Kohlenwasserstoffen bzw. Kohlenwasserstoffgemischen mit Siedepunkten von 40° C bis 200° C besteht.

5. Verfahren nach Anspruch 1 bis 5, dadurch gekennzeichnet, daß die Reaktion bei Temperaturen zwischen 40° C und 140° C ausgeführt wird.

6. Verfahren nach Anspruch 1 bis 6, dadurch gekennzeichnet, daß der Anteil der Summe der Polyurethankomponenten im Gesamtgewicht einschließlich Trägerphase zwischen 10 und 60 % liegt.

7. Verfahren nach Anspruch 1 bis 7, dadurch gekennzeichnet, daß der Aufbau der Polyurethanpulver nach der "one shot"-Methode erfolgt.

8. Verfahren nach Anspruch 1 bis 7, dadurch gekennzeichnet, daß der Aufbau der Polyurethanpulver nach der Prepolymermethode durchgeführt wird.

## Claims

1. A process for the direct preparation of polyurethane powders in a finely divided form by the reaction of polyisocyanates and isocyanate reactive compounds in a carrier phase, using interface active compounds, characterised in that the interface active compound used consists of at least one polymer of a urethane corresponding to the formula 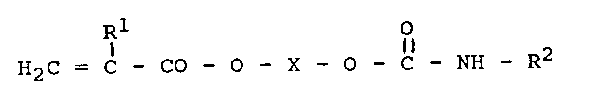 wherein
R¹ denotes H, CH_{3,}
X denotes an optionally branched aliphatic alkylidene having 2 to 10 carbon atoms, and
R² denotes an optionally branched aliphatic alkyl group having 6 to 30 carbon atoms
of a long chain alkyl isocyanate B1) and a hydroxyalkyl(meth)acrylic acid ester B2).

2. A process according to claim 1 or 2, characterised in that the compound used as component B1) is an isocyanate having 18 carbon atoms in the carbon chain and the compound used as component B2) is a mono(meth)acrylic acid ester of a C₂ to C₄ diol.

3. A process according to claims 1 to 3, characterised in that the carrier phase used is a hydrocarbon and in that the synthesis is carried out in the presence of from 0.05 to 10% of the interface active compound, based on the totasl weight of the polyurethane to be produced.

4. A process according to claims 1 to 4, characterised in that the carrier phase consists of aliphatic and/or alicyclic, optionally branched hydrocarbons or hydrocarbon mixtures having boiling points from 40° C to 200° C.

5. A process according to claims 1 to 5, characterised in that the reaction is carried out at temperatures from 40° C to 140° C.

6. A process according to claims 1 to 6, characterised in that the proportion of the sum of polyurethane components in the total weight including the carrier phase is from 10 to 60%.

7. A process according to claims 1 to 7, characterised in that the polyurethane powder is synthesised by the one shot method.

8. A process according to claims 1 to 7, characterised in that synthesis of the polyurethane powder is carried out by the prepolymer method.

## Revendications

1. Procédé pour la préparation directe de poudres de polyuréthanne sous forme finement divisée par la mise en réaction de polyisocyanates et de composés réactifs vis-à-vis de groupes isocyanate dans une phase de support en utilisant des composés tensioactifs, caractérisé en ce que, comme composé tensioactif, on utilise au moins un polymère d'un uréthanne de formule 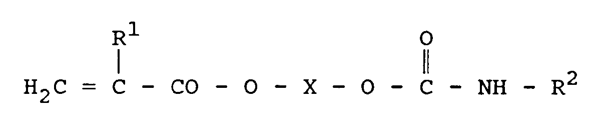 dans laquelle
R¹ représente H, CH₃,
X représente un radical alkylidène aliphatique éventuellement ramifié contenant de 2 à 10 atomes de carbone,
R² représente un radical alkyle aliphatique éventuellement ramifié contenant de 6 à 30 atomes de carbone
constitué par un alkylisocyanate B1) à longue chaîne et par un ester hydroxyalkylique d'acide (méth)acrylique B2).

2. Procédé selon la revendication 1, caractérisé en ce que, comme composant B1) on utilise un isocyanate contenant 18 atomes de carbone dans la chaîne carbonée, et comme composant B2) un ester mono(méth)acrylique d'un diol en C₂-C₄.

3. Procédé selon les revendications 1 et 2, caractérisé en ce que, comme phase de support, on utilise un hydrocarbure, et en ce qu'on effectue la synthèse en présence de 0,05 à 10 % du composé tensioactif rapportés au poids total du polyuréthanne à préparer.

4. Procédé selon les revendications 1 à 3, caractérisé en ce que la phase de support est constituée par des hydrocarbures ou des mélanges d'hydrocarbures aliphatiques et/ou alicycliques éventuellement ramifiés ayant des points d'ébullition de 40° C à 200° C.

5. Procédé selon les revendications 1 à 4, caractérisé en ce qu'on effectue la réaction à des températures entre 40° C et 140° C.

6. Procédé selon les revendications 1 à 5, caractérisé en ce que la fraction de la somme des composants de polyuréthanne dans le poids total, y compris la phase de support se situe entre 10 et 60 %.

7. Procédé selon les revendications 1 à 6, caractérisé en ce que la constitution de la poudre de polyuréthanne a lieu d'après le procédé "one shot".

8. Procédé selon les revendications 1 à 6, caractérisé en ce que la constitution de la poudre de polyuréthanne a lieu d'après le procédé de prépolymérisation.
